# EUROPÄISCHE PATENTSCHRIFT

(11) **EP 3 530 498 B1**
(45) Veröffentlichungstag und Bekanntmachung des Hinweises auf die Patenterteilung: **23.09.2020**
(21) Anmeldenummer: 18211551.9
(22) Anmeldetag: 11.12.2018
(51) Int. Cl.: A01D 67/00, B60G 9/02, A01D 41/12, B60G 17/016

(54) **LANDWIRTSCHAFTLICHES FAHRZEUG MIT EINEM FAHRWERK UND MIT EINEM CHASSIS UND VERFAHREN ZUM VERRINGERN EINER KIPPNEIGUNG DES FAHRZEUGS**
AGRICULTURAL VEHICLE WITH A RUNNING GEAR AND A CHASSIS AND METHOD FOR REDUCING THE INCLINATION OF THE RUNNING GEAR TO TILT
VÉHICULE AGRICOLE DOTÉ D'UNE SUSPENSION ET D'UN CHÂSSIS ET PROCÉDÉ DE RÉDUCTION D'UNE INCLINAISON DU VÉHICULE

(30) Priorität: 19.02.2018 DE 102018103627
(43) Veröffentlichungstag der Anmeldung: 28.08.2019
(73) Patentinhaber: CLAAS Selbstfahrende Erntemaschinen GmbH, 33428 Harsewinkel (DE)
(72) Erfinder: Niermann, Martin, 33428 Harsewinkel (DE); Dopheide, Gregor, 33775 Versmold (DE)

(56) Entgegenhaltungen:
- EP-A1- 2 444 304
- DE-A1- 10 256 539
- DE-A1-102007 025 598
- US-A1- 2016 107 641

## Beschreibung

Die vorliegende Erfindung betrifft ein landwirtschaftliches Fahrzeug nach dem Oberbegriff des Anspruchs 1. Beispiele für ein solches landwirtschaftliches Fahrzeug sind aus EP 2 444 304 A1 und aus US 2016/0107641 A1 bekannt. Insbesondere betrifft die vorliegende Erfindung einen

Mähdrescher, einen Feldhäcksler oder eine Futtererntemaschine, mit einem Fahrwerk, das einen starren Achskörper und einen Pendelachskörper umfasst, und mit einem Chassis, das an dem starren Achskörper und an dem Pendelachskörper gelagert ist, wobei es an dem Pendelachskörper um eine Pendelachse pendelnd gelagert ist. Die vorliegende Erfindung betrifft weiterhin ein Verfahren zum Verringern einer Kippneigung eines Chassis eines solchen landwirtschaftlichen Fahrzeugs gegenüber einem Fahrwerk des landwirtschaftlichen Fahrzeugs und/oder zum Verringern einer Kippneigung eines landwirtschaftlichen Fahrzeugs.

Landwirtschaftliche Fahrzeuge werden oftmals mit zumindest einem pendelnd gelagerten Achskörper, im Folgenden Pendelachskörper genannt, ausgestattet, um in unebenem Gelände einerseits Bodenunebenheiten leicht überwinden zu können, um einen stabilen Fahrbahnkontakt zu gewährleisten, und um Verwindungskräfte der Karosserie gering zu halten. Dafür offenbart beispielsweise die Druckschrift DE 10 2007 025 598 A1 einen Pendelachskörper mit einer sich quer zum Pendelachskörper erstreckenden fiktiven Pendelachse. Die fiktive Pendelachse liegt bei wenigstens einem Teil der Pendelbewegung höher als ein Scheitelpunkt der Räder. Dafür sind am Pendelachskörper zwei in einem Winkel zueinander angeordnete Lenker angelenkt, an denen das Chassis drehbeweglich gelagert ist. Die Position der fiktiven Pendelachse ist durch einen Schnittpunkt zweier fiktiver Verlängerungen, die sich in Längsrichtung der Lenker erstrecken, definiert. Der Schnittpunkt bildet außerdem einen Momentanpol in Bezug auf die Relativbewegung des Pendelachskörpers und eines über die Lenker mit diesem verbundenen Chassis. Ein solcher Pendelachskörper wird im Folgenden auch als Viergelenkachskörper bezeichnet.

Aufgrund ihrer Masse erfahren landwirtschaftliche Fahrzeuge beim Kurvenfahren, beim Überfahren von Hindernissen und/oder bei Seitenhangfahrt eine Seitenbeschleunigung, durch die sich ihr Chassis um eine Längsachse der Aufstandsfläche des Chassis dreht. Das Chassis neigt sich dann aufgrund seiner Masse zum Kurvenäußeren. Beim Umfahren von Hindernissen oder in sehr unebenem Gelände rollt das Chassis dadurch hin und her und kann sich aufschaukeln. Dadurch besteht im Extremfall die Gefahr, dass das Fahrzeug umkippt.

Bei Fahrzeugen mit einem starren Achskörper, das heißt einem Achskörper, an dessen Enden das Chassis, beispielsweise mittels Reifenfederung federnd, gelagert ist, und einem Pendelachskörper ist die Aufstandsfläche des Chassis etwa dreieckig. Durch diese Dreipunktlagerung ist der stabile Fahrbahnkontakt gewährleistet und die Verwindungskräfte der Karosserie sind gering. Bei diesen Fahrzeugen können die durch die Seitenbeschleunigung verursachten Momente jedoch nur durch den starren Achskörper abgestützt werden. Dadurch dreht sich das Chassis bei Kurvenfahrt um eine Längsachse des Dreiecks.

Beim Neigen eines Viergelenkachskörpers wandert der Momentanpol entlang einer Kurve hin und her. Der Momentanpol ist höher angeordnet, als der Pendelpol einer einfach gelagerten Pendelachse. Dadurch befindet er sich näher unter dem Schwerpunkt der Maschine, so dass das Kippmoment durch Querkraft kleiner wird, oder er liegt sogar über dem Schwerpunkt der Maschine, so dass die Querkraft tendenziell die Maschine in die Kurve legt. Daher ist die Kippstabilität eines Fahrzeugs mit einem Viergelenkachskörper gegenüber der eines Fahrzeugs mit einem Pendelachskörper, dessen Pendelpol unmittelbar am Pendelachskörper angeordnet ist, verbessert.

Die Aufstandsfläche bei Fahrzeugen mit starrem Achskörper der Vorder- und der Hinterachse ist demgegenüber rechteckig oder trapezförmig ausgebildet. Sie ist größer, als die dreieckige Aufstandsfläche eines Fahrzeugs mit Pendelachskörper. Dadurch kann ein solches Fahrzeug bei einer Seitenbeschleunigung weniger schnell umkippen. Im Vergleich mit den Fahrzeugen mit dem Pendelachskörper weist ein solches Fahrzeug daher die größte Kippstabilität auf.

Aufgabe der vorliegenden Erfindung ist es, ein landwirtschaftliches Fahrzeug mit einem Pendelachskörper, insbesondere einem Viergelenkachskörper, zu schaffen, dessen Kippstabilität, insbesondere bei Kurvenfahrt, beim Überfahren von Hindernissen und/oder beim Umfahren von Hindernissen, verbessert ist.

Die Aufgabe wird gelöst mit einem landwirtschaftlichen Fahrzeug mit den Merkmalen des unabhängigen Patentanspruchs 1 sowie mit einem Verfahren mit den Merkmalen des Patentanspruchs 11. Vorteilhafte Ausführungsformen sind den abhängigen Ansprüchen entnehmbar.

Dafür wird ein landwirtschaftliches Fahrzeug geschaffen. Das landwirtschaftliche Fahrzeug ist bevorzugt ein Mähdrescher, ein Feldhäcksler oder eine Futtererntemaschine. Es weist ein Fahrwerk auf, das einen starren Achskörper und einen Pendelachskörper umfasst. Zudem weist es ein Chassis auf, das an dem starren Achskörper und an dem Pendelachskörper gelagert ist. Am Pendelachskörper ist das Chassis um eine Pendelachse pendelnd gelagert. Am starren Achskörper ist es bevorzugt federnd, beispielsweise mittels federnder Reifen und/oder mittels einer federnden Lagerung, gelagert. Zum Lagern des Chassis sind am starren Achskörper bevorzugt zwei Lager vorgesehen, an denen das Chassis federnd gelagert ist. Weiterhin bevorzugt ist das Chassis am Pendelachskörper mittels eines Lagers pendelnd gelagert. Ein solches Lager kann im Falle eines Viergelenkachskörpers ein fiktives Lager sein, welches durch einen Schnittpunkt von fiktiven Verlängerungen bestimmt ist, die sich entlang zweier Lenker erstrecken, an denen das Chassis drehbeweglich gelagert ist.

Das landwirtschaftliche Fahrzeug zeichnet sich dadurch aus, dass es zumindest ein Wirkelement zum Ändern der Steifigkeit der Lagerung des Chassis am Pendelachskörper umfasst, das mit dem Pendelachskörper und/oder dem Chassis zusammenwirkt, so dass sich eine Kippneigung des Chassis gegenüber dem Fahrwerk und/oder eine Kippneigung des Fahrzeugs in Abhängigkeit von einer aktuellen Kippneigung verringert, wobei zumindest ein Wirkelement eine Bremse, insbesondere eine Scheibenbremse ist.

Die Kippneigung im Sinne der Erfindung ist die Stärke, mit der das Chassis relativ zum Fahrwerk, und/oder mit der das Fahrzeug zum Kippen neigt. Das Kippen im Sinne der Erfindung ist das Rollen um eine Längsachse einer Aufstandsfläche des Fahrzeugs in eine Kipprichtung. Die Aufstandsfläche ist dabei durch die Lagerung des Chassis am Fahrwerk bestimmt. Sie ist bei einem Fahrzeug mit Pendelachskörper etwa dreieckig ausgebildet. Die Längsachse, um die das Chassis relativ zum Fahrwerk rollt, ist bei einem solchen Fahrzeug eine Längsachse des Dreiecks. Im Folgenden werden die Begriffe Kippen und Rollen synonym verwendet.

Eine auf das Chassis wirkende Seitenkraft und/oder eine Seitenbeschleunigung des Chassis in eine Kipprichtung relativ zum Fahrwerk tritt beim Kurvenfahren, beim Überfahren von Hindernissen und/oder bei Seitenhangfahrt auf, wobei das Chassis dabei aufgrund seiner Masse relativ zum Fahrwerk kippt. Beim Umfahren von Hindernissen kippt das Chassis hin und her und kann sich aufschaukeln. Eine ausreichend große, kritische Neigung des Chassis gegenüber dem Fahrwerk kann sogar zum Umkippen des gesamten Fahrzeugs führen.

Um das Kippen des Chassis relativ zum Fahrwerk zu verringern oder zu verhindern, und/oder das Kippen des Fahrzeugs zu verhindern, ist es bevorzugt, dass die Steifigkeit der Lagerung des Chassis auf der Kippseite des Fahrzeugs verstärkt wird. Die Kippseite ist dabei die Seite des Fahrzeugs, in deren Kipprichtung sich das Chassis neigt. Ein Ändern der Steifigkeit der Lagerung im Sinne der Erfindung ist aber auch ein Ziehen des Chassis zu einer der Kippseite gegenüberliegenden Lenkseite, und/oder ein Teilblockieren des Kippens des Chassis, insbesondere durch ein Abbremsen der Drehbewegung des Chassis relativ zum Fahrwerk. Zudem kann die Steifigkeit der Lagerung auch durch einen Anschlag, der beispielsweise am Pendelachskörper oder am Chassis angeordnet ist, verändert sein.

In einer bevorzugten Ausführungsform wird die Steifigkeit der Lagerung zusätzlich durch Federn, die an gegenüberliegenden Enden des Pendelachskörpers angeordnet sind, verändert. Dabei sind Federn bevorzugt, die in Abhängigkeit vom Fahrzeugtyp und/oder einem insbesondere kritischen Fahrzustand eine nichtlineare Federkennlinie aufweisen. Besonders bevorzugt sind Federn, deren Federsteifigkeit mit steigender Neigung des Chassis relativ zum Fahrwerk größer wird.

In einer besonders bevorzugten Ausführungsform ist das Wirkelement steuerbar oder regelbar ausgebildet, wobei das landwirtschaftliche Fahrzeug
- ein Erfassungsmittel zum Erfassen der Kippneigung umfasst, sowie
- eine Datenverarbeitungseinheit, die zur Verarbeitung von Daten vorgesehen ist, und
- eine Steuerungs- und Regelungseinheit, mit der das Wirkelement einstellbar ist. Die Datenverarbeitungseinheit ist bei dieser Ausführungsform bevorzugt dazu ausgebildet, eine optimale Steifigkeit der Lagerung in Abhängigkeit von der erfassten Kippneigung zu ermitteln. Weiterhin ist die Steuerungs- und Regelungseinheit bei dieser Ausführungsform bevorzugt dazu ausgebildet, das Wirkelement in Abhängigkeit von der optimalen Steifigkeit der Lagerung automatisch einzustellen. Dadurch ist die Steifigkeit der Lagerung in Abhängigkeit von der Kippneigung steuer- oder regelbar.

Dabei ist es bevorzugt, dass die Steuerungs- und Regelungseinheit dazu ausgebildet ist, das Wirkelement nur einzustellen, wenn die erfasste Kippneigung oder eine Änderung der Kippneigung einen Schwellwert überschreitet. Dadurch wird die Steifigkeit der Lagerung nicht ständig schon bei geringfügig ungleichmäßiger Bodenbeschaffenheit nachgestellt, sondern erst bei größeren Änderungen. Dabei ist die Größe der Änderung, die zum Nachregeln führt, durch den Schwellwert bestimmt. Da die Steifigkeit der Lagerung nur bei größeren Änderungen nachgeregelt wird, kann der Fahrkomfort weitestgehend erhalten und können dauerhaft große Kräfte an der Karosserie vermieden werden.

In einer bevorzugten Ausführungsform wird die optimale Steifigkeit der Lagerung in Abhängigkeit vom aktuellen Fahrzustand des Fahrzeugs bestimmt. Der Fahrzustand ist von einer Vielzahl maschinenspezifischer und/oder stabilitätsbeeinflussender Faktoren abhängig, beispielsweise von
- einer Antriebsleistung des Fahrzeugs,
- einer Geschwindigkeit des Fahrzeugs,
- einer Hanglage des Fahrzeugs,
- eines Kurvenradius des Fahrzeugs,
- einem Gewicht und/oder einer Gewichtsverteilung des Fahrzeugs,
- einer Karosseriestruktur des Fahrzeugs
- den Reifenluftdrücken der Reifen des Fahrzeugs
und weitere Faktoren. Vorzugsweise werden die maschinenspezifischen und/oder stabilitätsbeeinflussenden Faktoren sensorisch, insbesondere mit weiteren Erfassungsmitteln, erfasst. Dadurch kann die Steifigkeit der Lagerung in Abhängigkeit vom Fahrzustand eingestellt werden, um die Kippneigung zu verringern und ein Kippen des Fahrzeugs zu verhindern.

Bei Kenntnis verschiedener Fahrzustände kann durch Einstellen des Wirkelementes gezielt Einfluss auf die Drehbewegung des Pendelachskörpers genommen werden. Daher ist es bevorzugt, vor allem kritische Fahrzustände zu erfassen. Dafür ist die Datenverarbeitungseinheit bevorzugt dazu ausgebildet, einen Verlauf der erfassten Kippneigung mit Referenz- Kippneigungsverläufen oder einen Verlauf der Änderung der erfassten Kippneigung mit Referenz- Kippneigungsänderungsverläufen verschiedener, insbesondere kritischer, Fahrzustände zu vergleichen, und die Steifigkeit der Lagerung in Abhängigkeit von einem Referenz- Kippneigungsverlauf oder von einem Referenz-Kippneigungsänderungsverlauf einzustellen, wenn ein bestimmter, insbesondere kritischer, Fahrzustand erkannt wird. Die Referenz- Kippneigungsverläufe und/oder Referenz-Kippneigungsänderungsverläufe können dafür von verschiedenen der maschinenspezifischen und/oder stabilitätsbeeinflussenden Faktoren abhängig sein, um in Abhängigkeit vom Fahrzustand eine schnelle Vorauswahl der möglichen Referenz-Kippneigungsverläufe zu treffen. Eine solche Regelung ermöglicht nicht nur eine sehr schnelle Reaktion auf einen bestimmten, insbesondere kritischen, Fahrzustand, sondern eine vorausschauende Regelung, durch die das Eintreten des kritischen Fahrzustands vermieden werden kann.

Das Erfassungsmittel erfasst bevorzugt die Seitenkraft, die Seitenbeschleunigung, die Rollneigung, insbesondere einen Winkel des Chassis gegenüber der Horizontalen oder gegenüber dem Fahrwerk, oder den Lenkwinkel des Fahrzeugs oder des Fahrwerks. Der mit dem Erfassungsmittel erfasste Messwert beschreibt daher bevorzugt eine Kraft, eine Beschleunigung oder einen Winkel. Dafür ist das Erfassungsmittel vorzugsweise als Drehwinkelmesser, Pendelwinkelmesser, Beschleunigungssensor, Gierratensensor oder Massependel, dessen Auslenkung erfasst wird, ausgebildet.

Ebenfalls bevorzugt wirkt die Bremse bevorzugt mit einem sich in Richtung der Pendelachse erstreckenden Zapfen zusammen. Sie ist dann bevorzugt zum Abbremsen der Drehbewegung des Chassis um die Pendelachse vorgesehen. In einer weiterhin bevorzugten Ausführungsform ist jeweils beidseitig der Pendelachse eine Bremse vorgesehen.

Weiterhin bevorzugt umfasst das landwirtschaftliche Fahrzeug eine Anordnung aus mehreren, insbesondere zwei, zusätzlichen Wirkelementen. In dieser Ausführungsform sind die zusätzlichen Wirkelemente bevorzugt jeweils als Federn oder als, insbesondere hydraulische, pneumatische oder hydropneumatische, Feder- Dämpfungselemente ausgebildet. Die Feder-Dämpfungselemente wirken in einer ganz besonders bevorzugten Ausführungsform hydropneumatisch. Besonders bevorzugt wirken die 'zusätzlichen Wirkelemente dieser Ausführungsform, insbesondere in Abhängigkeit von der Kippneigung sowie dem aktuellen Fahrzustand, nichtlinear.

Die zumindest zwei 'zusätzlichen Wirkelemente eines solchen landwirtschaftlichen Fahrzeugs sind weiterhin bevorzugt spiegelbildlich zur Pendelachse angeordnet. Bei einem als Viergelenkachskörper ausgebildeten Pendelachskörper ist es zudem bevorzugt, dass sie als Federn oder als hydraulische, pneumatische oder hydropneumatische Feder-Dämpfungselemente ausgebildet sind, und als Lenker zum Lagern des Chassis dienen. Dadurch können die herkömmlichen Lenker eingespart werden.

In einer besonders bevorzugten Ausführungsform des landwirtschaftlichen Fahrzeugs bildet der starre Achskörper eine Vorderachse und der Pendelachskörper eine Hinterachse des Fahrwerks. Vorzugsweise wird die Hinterachse zudem gelenkt.

In einer weiteren bevorzugten Ausführungsform ist an gegenüberliegenden Enden des starren Achskörpers jeweils ein Rad angeordnet, das mittels einer Radbremse abbremsbar ist, wobei die Steuerungs- und Regelungseinheit zudem dazu ausgebildet ist, zumindest eines der Räder in Abhängigkeit von der optimalen Steifigkeit der Lagerung mittels seiner Radbremse abzubremsen. Durch das Abbremsen des Rades kann eine Gegenkraft erzeugt werden, die der Kippbewegung entgegenwirkt. Das Abbremsen des Rades wirkt, ähnlich einer Fahrdynamikregelung beim Personenkraftwagen, einem Übersteuern des landwirtschaftlichen Fahrzeugs entgegen. Vorzugsweise ist das Rad ein kurvenäußeres Vorderrad des Fahrzeugs.

Die Aufgabe wird weiterhin gelöst mit einem Verfahren zum Verringern einer Kippneigung eines Chassis eines insbesondere erfindungsgemäßen landwirtschaftlichen Fahrzeugs gegenüber einem Fahrwerk des landwirtschaftlichen Fahrzeugs, und/oder zum Verringern einer Kippneigung des landwirtschaftlichen Fahrzeugs, bei dem
- die Kippneigung eines Chassis gegenüber einem Fahrwerk und/oder die Kippneigung des landwirtschaftlichen Fahrzeugs erfasst wird,
- anhand der erfassten Kippneigung eine optimale Steifigkeit der Lagerung ermittelt wird, und
- die Steifigkeit der Lagerung in Abhängigkeit von der optimalen Steifigkeit eingestellt wird.

Dadurch wird gezielt auf die Drehbewegung des Pendelachskörpers Einfluss genommen, und das Kippen des Chassis kann verringert oder vermieden, und/oder das Kippen des Fahrzeugs kann vermieden werden.

Vorzugsweise wird die Steifigkeit der Lagerung neu eingestellt, wenn die erfasste Kippneigung oder eine Änderung der Kippneigung einen Schwellwert überschreitet. Dadurch kann ein ständiges neues Einstellen der Steifigkeit der Lagerung, beispielsweise bei geringfügigen Unebenheiten des Fahrweges, vermieden werden.

Besonders bevorzugt wird die optimale Steifigkeit der Lagerung in Abhängigkeit vom Fahrzustand des Fahrzeugs bestimmt. Dadurch kann vorausschauend Einfluss auf die Drehbewegung des Pendelachskörpers genommen werden. Dabei ist es bevorzugt, maschinenspezifische und/oder stabilitätsbeeinflussende Faktoren, die den Fahrzustand des landwirtschaftlichen Fahrzeugs bestimmen, sensorisch, insbesondere mittels weiterer Erfassungsmittel, zu erfassen.

Das Verfahren sieht dafür bevorzugt vor, einen Verlauf der erfassten Kippneigung mit Referenz- Kippneigungsverläufen oder einen Verlauf der Änderung der Kippneigung mit Referenz- Kippneigungsänderungsverläufen verschiedener, insbesondere kritischer, Fahrzustände zu vergleichen. Dieser Vergleich ermöglicht den Rückschluss auf die zukünftige Kippneigung. Wenn ein bestimmter, insbesondere kritischer, Fahrzustand erkannt wird, kann die Steifigkeit der Lagerung dann in Abhängigkeit von dem Referenz-Kippneigungsverlauf oder von dem Referenz- Kippneigungsänderungsverlauf dieses Fahrzustands so eingestellt werden, dass die Kippneigung gegenüber der zukünftig erwarteten Kippneigung verringert ist. Die optimale Steifigkeit, die für den Vergleich benötigten Referenz- Kippneigungsverläufe und/oder Referenz-Kippneigungsänderungsverläufe sind dafür bevorzugt, insbesondere tabellarisch, in der Datenverarbeitungseinheit hinterlegt, insbesondere in Abhängigkeit von den maschinenspezifischen und/oder stabilitätsbeeinflussenden Faktoren, die den Fahrzustand bestimmen.

Die Seitenkraft, die Seitenbeschleunigung, der Lenkwinkel und/oder die Rollneigung des landwirtschaftlichen Fahrzeugs sind ein Maß für die Kippneigung, das heißt für die Stärke, mit der sich das Fahrzeug zur Kippseite hinneigt. Die Kippneigung wird daher bevorzugt durch Messung der Seitenkraft, der Seitenbeschleunigung, des Lenkwinkels und/oder der Rollneigung des landwirtschaftlichen Fahrzeugs erfasst. Dann wird die Steifigkeit der Lagerung vorzugsweise verändert, indem die Lagerung des Chassis am Pendelachskörper eingestellt wird. Ein solches Einstellen erfolgt durch ein Abbremsen der Drehbewegung des Pendelachskörpers um die Pendelachse. Zusätzlich kann ein solches Einstellen erfolgen durch einen Druck mittels einer Feder und/oder eines Feder- Dämpfungselementes auf das Chassis an der Kippseite und/oder ein Ziehen einer Feder und/oder eines Feder- Dämpfungselemente am Chassis auf der der Kippseite gegenüberliegenden Lenkseite. Zusätzlich kann ein Anschlag ein Kippen des Chassis gegenüber dem Fahrwerk über einen vorgegebenen Drehwinkel hinaus verhindern.

Die Erfindung ermöglicht für ein landwirtschaftliches Fahrzeug, dessen Fahrwerk einen starren Achskörper und einen Pendelachskörper umfasst, eine gezielte Einflussnahme auf die Kippneigung des Chassis gegenüber dem Fahrwerk und/oder auf die Kippneigung des Fahrzeugs, indem die Lagerung des Chassis am Pendelachskörper verändert wird. Die Lagerung des Chassis am Pendelachskörper wird beispielsweise an der Kippseite des Fahrzeugs versteift, das Chassis wird zu der der Kippseite gegenüberliegenden Lenkseite gezogen, und/oder die Drehbewegung des Chassis wird abgebremst. Dabei kann nicht nur sehr schnell auf kritische Fahrzustände reagiert werden, sondern die Kippneigung kann sogar vorausschauend beeinflusst werden, so dass ein Kippen des Fahrzeugs verhindert wird.

Die Erfindung wird im Folgenden anhand von Figuren erläutert. Die Figuren sind lediglich beispielhaft und schränken den allgemeinen Erfindungsgedanken nicht ein. Es zeigen:
- Fig. 1: in (a) ein landwirtschaftliches Fahrzeug mit einem Chassis und einer starren Achse eines Fahrwerks, die eine Vorderachse des Fahrzeugs bildet, in (b) eine Pendelachse für das Fahrwerk eines landwirtschaftlichen Fahrzeugs, und in (c) schematisch ein um eine Kippachse kippendes landwirtschaftliches Fahrzeug;
- Fig. 2: in (a) schematisch eine Heckseite eines erfindungsgemäßen landwirtschaftlichen Fahrzeugs, und in (b) schematisch ein Fahrwerk des landwirtschaftlichen Fahrzeugs aus Fig. 2 (a) beim Kurvenfahren von oben;
- Fig. 3: in (a) und (b) einen als Viergelenkachskörper ausgebildeten Pendelachskörper einer weiteren Ausführungsform eines erfindungsgemäßen landwirtschaftlichen Fahrzeugs, wobei in (b) ein Teil eines Chassis des landwirtschaftlichen Fahrzeugs an dem Viergelenkachskörper gelagert ist; und
- Fig. 4: schematisch eine weitere Ausführungsform eines erfindungsgemäßen landwirtschaftlichen Fahrzeugs mit einem als Viergelenkachskörper ausgebildeten Pendelachskörper.

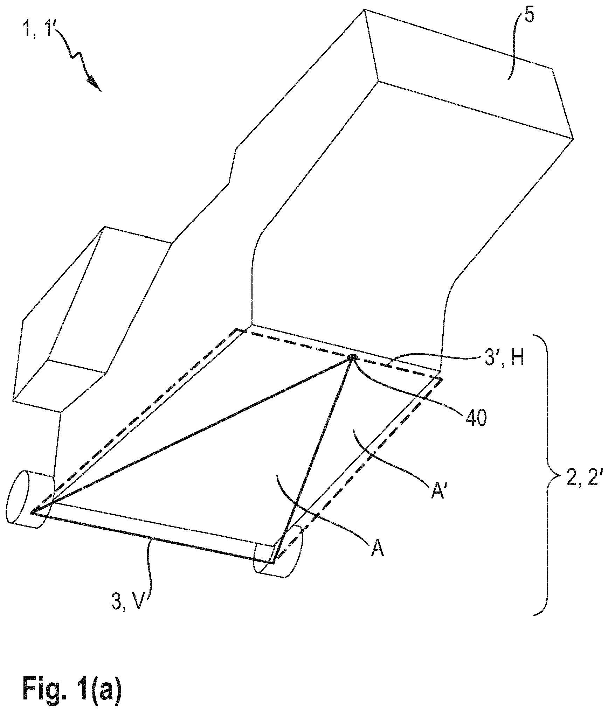

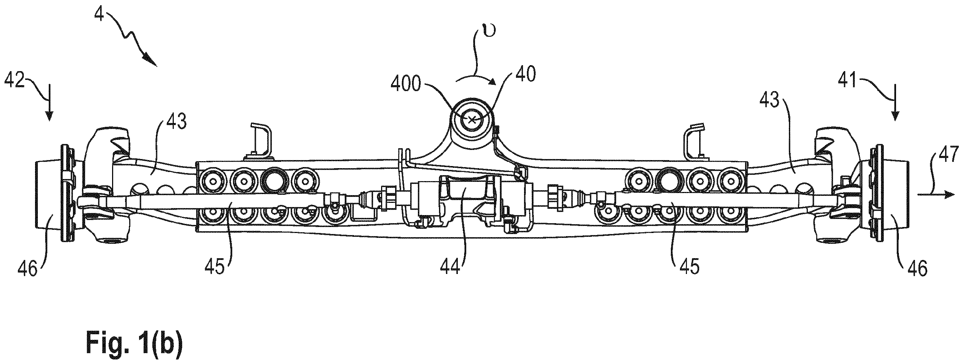

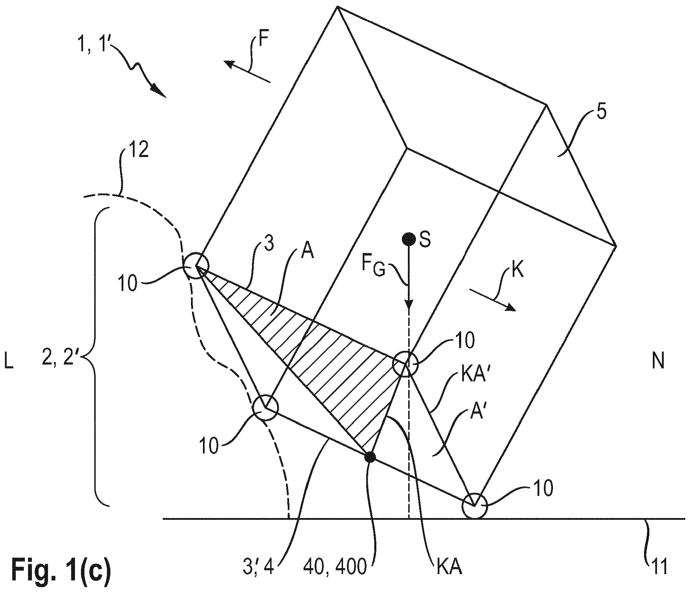

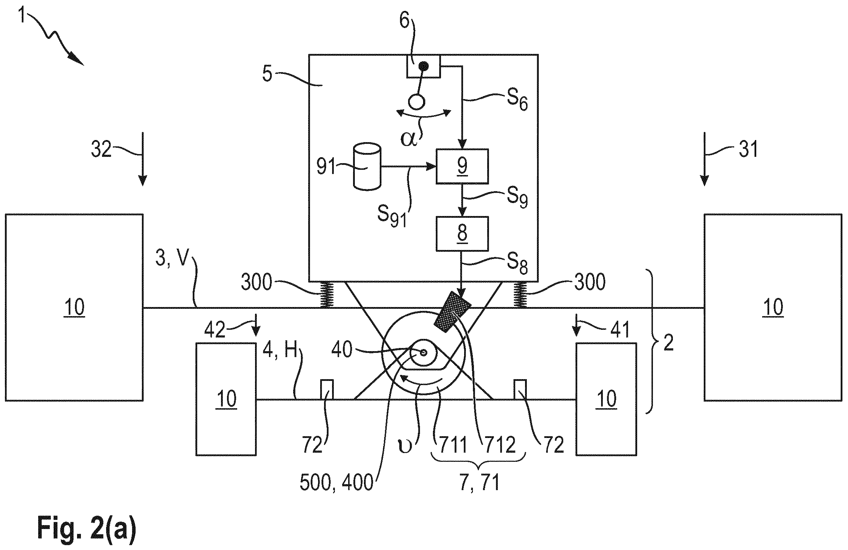

Figur 1 zeigt in (a) ein Chassis 5 eines landwirtschaftlichen Fahrzeugs 1, 1', das an einer Frontseite (nicht bezeichnet) an einem starren Achskörper 3 eines Fahrwerks 2, 2' gelagert ist. Die starre Achskörper 3 bildet eine Vorderachse V des Fahrzeugs 1, 1'. Das Chassis 5 ist an dem starren Achskörper 3 mittels zwei Lagern (s. Fig. 2(a)) federnd gelagert.

Von dem Fahrwerk 2, 2' ist lediglich der starre Achskörper 3 dargestellt. Jedoch ist mittels einer gestrichelten Linie und einer durchgezogenen Linie an einer Unterseite (nicht bezeichnet) des Chassis 5 schematisch jeweils eine Aufstandsfläche A, A' des Chassis 5 am Fahrwerk 2, 2' dargestellt. Dabei zeigt die gestrichelte Linie die Aufstandsfläche A' für den Fall, dass das Fahrwerk 2' neben dem starren, als Vorderachse V vorgesehenen Achskörper 3' zudem einen starren Achskörper 3' als Hinterachse H aufweist. Die Aufstandsfläche A' ist für diesen Fall etwa rechteckig ausgebildet, da auch am starren Achskörper 3' der Hinterachse H zwei Lager (nicht gezeigt) zum federnden Lagern des Chassis 5 vorgesehen sind.

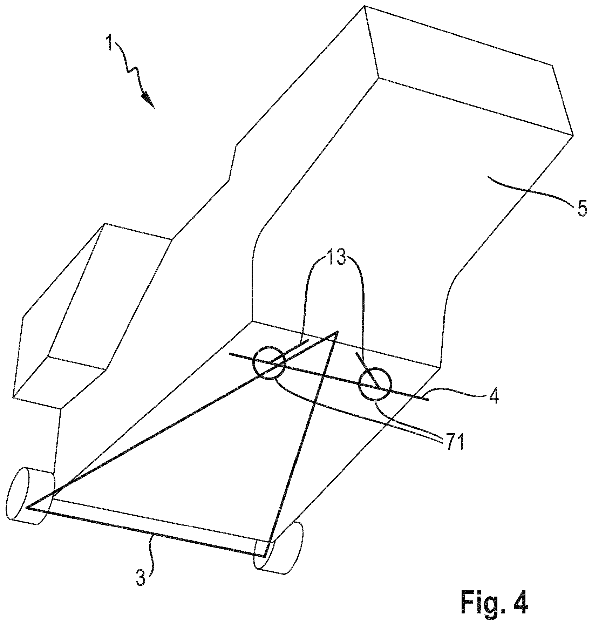

Die durchgezogene Linie zeigt die Aufstandsfläche A des Chassis 5 am Fahrwerk 2 für ein landwirtschaftliches Fahrzeug 1, das neben dem starren, als Vorderachse V vorgesehenen Achskörper 3 einen Pendelachskörper 4 (s. Fig. 1 (b)) als Hinterachse H aufweist. Da für den Fall, dass die Hinterachse H durch einen Pendelachskörper 4 gebildet ist, nur ein Lager 400, (s. Fig. 1 (b)) oder bei einem Viergelenkachskörper 4 ein fiktives Lager 400 (s. Fig. 4(a), (b)), zum pendelnden Lagern des Chassis 5 vorgesehen ist, ist die Aufstandsfläche A etwa dreieckig. Das Chassis 5 ist dann um eine Pendelachse 40, die sich quer zum Pendelachskörper 4 erstreckt, relativ zum Pendelachskörper 4 in und gegen eine Drehrichtung δ drehbar.

Fig. 1 zeigt in (b) eine erste Ausführungsform eines Pendelachskörpers 4. Mittig des Pendelachskörpers 4 ist eine Aufnahme 400 angeordnet, die als Lager für das Chassis 5 dient. Die Pendelachse 40 erstreckt sich quer zum Pendelachskörper 4 in Richtung der Aufnahme 400. Das Chassis 5 wird beispielsweise mittels eines Zapfens 500 (s. Fig. 2 (a)), der am Chassis 5 festgelegt ist und sich in Richtung der Pendelachse 40 erstreckt, drehbar in der Aufnahme 400 befestigt. Die dargestellte Pendelachse 40 ist teleskopierbar. Sie weist dafür Teleskoparme 43 auf, die in und gegen eine Erstreckungsrichtung 47 des Pendelachskörpers 4 verschieblich sind. Zudem weist der Pendelachskörper 4 gegenüberliegende Enden 41, 42 auf, an denen Radaufnahmen 46 angeordnet sind. Die Radaufnahmen 46 sind zum Anordnen von Rädern 10 (s. Fig. 1 (c)) vorgesehen. Sie sind hier gelenkig am Pendelachskörper 4 befestigt, so dass die Räder 10 lenkbar sind. Dieser Pendelachskörper 4 ist daher als lenkbare Hinterachse H nutzbar. Zum Lenken der Räder 10 weist er ein Lenkgetriebe 44 auf, das mittels teleskopierbarer Lenkarme 45 mit den Radaufnahmen 46 verbunden ist.

Fig. 1 (c) zeigt schematisch ein landwirtschaftliches Fahrzeug 1, 1' beim Überfahren eines Hindernisses 12. Zur Vereinfachung weist das Chassis 5 hier eine etwa quadratische Form auf. Das landwirtschaftliche Fahrzeug 1, 1' fährt in eine Fahrtrichtung F.

Auch in dieser Figur ist der Fall, dass sowohl die Vorderachse V als auch die Hinterachse H des Fahrwerks 2' aus einem starren Achskörper 3, 3' gebildet sind, dem Fall gegenübergestellt, dass die Vorderachse V aus einem starren Achskörper 3 und die Hinterachse H aus einem Pendelachskörper 4 gebildet sind. In beiden Fällen kippt das Chassis 5 beim Überfahren eines Hindernisses 12 um eine Kippachse KA, KA'.

Für den Fall der als starren Achskörper 3' ausgebildeten Hinterachse H erstreckt sich die Kippachse KA' etwa von einem Rad 10 an der Frontseite zu einem Rad 10 an der Heckseite (nicht bezeichnet) des landwirtschaftlichen Fahrzeugs 1'. Die Aufstandsfläche A' ist dann etwa rechteckig, hier etwa quadratisch, ausgebildet. Eine Gewichtskraft, die hier durch einen zum Boden hin gerichteten Pfeil FG dargestellt ist, greift in einem Schwerpunkt S des landwirtschaftlichen Fahrzeugs 1 an. Sie trifft auf die Aufstandsfläche A', so dass das landwirtschaftliche Fahrzeug 1 in diesen Fall nicht kippt.

Demgegenüber erstreckt sich die Kippachse KA bei einem landwirtschaftlichen Fahrzeug 1 mit einer als Pendelachskörper 4 ausgebildeten Hinterachse H von einem Rad 10 an der Frontseite zum Lager 400 des Chassis 5 am Pendelachskörper 4. Dies ist mittig des Pendelachskörpers 4 angeordnet. Aufgrund der im Vergleich zur Aufstandsfläche A' des zuvor beschriebenen Fahrzeugs 1' erheblich kleineren Aufstandsfläche A trifft die im Schwerpunkt S angreifende Gewichtskraft FG bei diesem Fahrzeug 1 nicht auf die Aufstandsfläche A. Daher kippt dieses landwirtschaftliche Fahrzeug 1 um.

Um die Kippstabilität eines solchen mit einem Pendelachskörper 4 ausgestatteten landwirtschaftlichen Fahrzeugs 1 zu verbessern, weist dieses erfindungsgemäß ein oder mehrere Wirkelemente 7 auf, mit denen eine Steifigkeit der Lagerung des Chassis 5 am Pendelachskörper 4 veränderbar ist. Dies zeigt Fig. 2 (a).

In Fig. 2 (a) ist ein erfindungsgemäßes landwirtschaftliches Fahrzeug 1 schematisch dargestellt. Das landwirtschaftliche Fahrzeug 1 ist beispielsweise ein Mähdrescher, ein Feldhäcksler oder eine Futtererntemaschine. Fig. 2 (a) zeigt eine Heckseite (nicht bezeichnet) des Fahrzeugs 1.

Das landwirtschaftliche Fahrzeug 1 weist ein Fahrwerk 2 auf, das einen starren Achskörper 3 als Vorderachse V und einen Pendelachskörper 4 als Hinterachse H umfasst. Zudem weist es ein Chassis 5 auf, das an dem starren Achskörper 3 mittels zweier Lager 300 federnd, und an dem Pendelachskörper 4 mittels eines Lagers 400 um eine Pendelachse 40 pendelnd gelagert ist. An den gegenüberliegenden Enden 31, 32 des starren Achskörpers 3 und an den gegenüberliegenden Enden 41, 42 des Pendelachskörpers 4 ist jeweils ein Rad 10 angeordnet. Die Erfindung umfasst aber auch landwirtschaftliche Fahrzeuge 1 mit insbesondere lenkbaren Raupenlaufwerken (nicht gezeigt).

Der Pendelachskörper 4 weist eine Aufnahme 400 auf, die als Lager für das Chassis 5 dient. Dafür weist das Chassis 5 einen Zapfen 500 auf, der die Aufnahme 400 durchsetzt. Die Aufnahme 400 und der Zapfen 500 erstrecken sich in Richtung der Pendelachse 40. Dadurch ist das Chassis 5 um die Pendelachse 40 in und gegen die Drehrichtung δ relativ zum Pendelachskörper 4 drehbar. Ein Drehen beziehungsweise Kippen des Chassis 5 relativ zum Pendelachskörper 4 in eine Drehrichtung δ, im Folgenden auch Kipprichtung K genannt, tritt beim Kurvenfahren, bei Seitenhangfahrt, beim Umfahren von Hindernissen 12 und/oder beim Überfahren von Hindernissen 12 auf. Das Chassis 5 neigt sich dann zu einer Kippseite N.

Um die Kippstabilität des landwirtschaftlichen Fahrzeugs 1 zu verbessern, wird die Steifigkeit der Lagerung des Chassis 5 am Pendelachskörper 4 so geändert, dass sich die Kippneigung, das heißt die Stärke, mit der das landwirtschaftliche Fahrzeug 1 zum Kippen neigt, verringert. Dafür ist das zumindest eine Wirkelement 7 vorgesehen. Das Wirkelement 7 wirkt mit dem Pendelachskörper 4 und/oder dem Chassis 5 zusammen. Es ist hier als Scheibenbremse 71 ausgebildet und weist eine Bremsscheibe 711 und einen Bremssattel 712 auf. Die Bremsscheibe 711 ist am Pendelachskörper 4 und der Bremssattel 712 ist am Chassis 5 angeordnet. Es ist aber auch eine umgekehrte Anordnung möglich, bei der die Bremsscheibe 711 am Chassis 5 und der Bremssattel 712 am Pendelachskörper 4 angeordnet ist. Zudem sind neben einer Scheibenbremse 71 auch andere Ausführungsformen von Bremsen verwendbar.

Beim Kippen des Chassis 5 relativ zum Pendelachskörper 4 in die Kipprichtung K wird die Scheibenbremse 71 angezogen. Dadurch blockiert sie das weitere Kippen. Die Scheibenbremse 71 wirkt dann wie eine Versteifung der Lagerung auf der Kippseite N. Da sie das weitere Kippen blockiert, verhindert sie ein Umkippen des Fahrzeugs 1.

Zusätzlich zu der Scheibenbremse 71 können zudem auch eine oder mehrere insbesondere nichtlinear wirkende Federn (nicht gezeigt), Feder- Dämpfungselemente 73 und/oder ein Anschlag 72 als Wirkelemente 7 vorgesehen sein. Zu Erläuterungszwecken ist an den gegenüberliegenden Enden 41, 42 des Pendelachskörpers 4 jeweils ein Anschlag 72 als weitere Wirkelemente 7 schematisch gezeigt.

Das Andern der Steifigkeit der Lagerung kann zusätzlich durch eine auf das Chassis 5 wirkende Federkraft auf der Kippseite N und/oder durch ein Ziehen am Chassis 5 zu einer der Kippseite N gegenüberliegenden Lenkseite L erfolgen.

Bei dem dargestellten landwirtschaftlichen Fahrzeug 1 ist die Bremskraft steuer- oder regelbar. Dadurch kann aktiv auf die Drehbeweglichkeit des Chassis 5 relativ zum Pendelachskörper 4 eingewirkt werden, insbesondere in Abhängigkeit von einem aktuellen Fahrzustand des landwirtschaftlichen Fahrzeugs. Die Drehbeweglichkeit ist so gezielt veränderbar.

Das landwirtschaftliche Fahrzeug 1 weist dafür eine Datenverarbeitungseinheit 9 auf, die dazu ausgebildet ist, eine optimale Steifigkeit der Lagerung zu ermitteln. Zudem weist es eine Steuerungs- und Regelungseinheit 8 auf, die dazu ausgebildet ist, das Wirkelement 7 in Abhängigkeit von der optimalen Steifigkeit der Lagerung automatisch einzustellen.

Die optimale Steifigkeit der Lagerung wird in Abhängigkeit von einer erfassten Kippneigung ermittelt. Zum Erfassen der Kippneigung weist das landwirtschaftliche Fahrzeug 1 ein Erfassungsmittel 6 auf. Die mit dem Erfassungsmittel 6 sensorisch erfassten Messdaten S6 sind ein Maß für die Kippneigung des Chassis 5 relativ zum Pendelachskörpers 4 und/oder für die Kippneigung des Fahrzeugs 1.

Das Erfassungsmittel 6 ist hier als Pendelwinkelmesser ausgebildet. Mit ihm ist ein Winkel α des Chassis 5 relativ zur Horizontalen messbar. Alternativ oder zusätzlich können als Erfassungsmittel 6 auch ein Drehwinkelmesser, ein Beschleunigungssensor und/oder ein Massependel vorgesehen sein, mit denen die auf das landwirtschaftliche Fahrzeug 1 wirkende Seitenbeschleunigung, seine Rollneigung, insbesondere der Winkel des Chassis 5 relativ zum Fahrwerk 2, und/oder der Lenkwinkel des landwirtschaftlichen Fahrzeugs 1 messbar sind.

Die Datenverarbeitungseinheit 9 erhält von dem Erfassungsmittel 6 die Messdaten S6, hier also den Winkel des Chassis 5 zur Horizontalen. Aus den Messdaten S6 ermittelt sie die optimale Steifigkeit der Lagerung.

Alternativ oder zusätzlich kann die Datenverarbeitungseinheit 9 einen Datenspeicher 91 umfassen, in welchem Speicherdaten S91 zur vereinfachten Steuerung oder Regelung der Steifigkeit der Lagerung des Chassis 5 am Pendelachskörper 4 hinterlegt sind. Solche hinterlegten Speicherdaten S91 sind bevorzugt Fahrzustands- abhängig, um eine sehr schnelle Steuerung oder Regelung zu ermöglichen. Beispielsweise können den Messdaten S6 und/oder der Kippneigung unmittelbar die optimale Steifigkeit der Lagerung zugeordnet sein. Eine solche Zuordnung kann tabellarisch, insbesondere Fahrzustands- abhängig, erfolgen.

Um eine Fahrzustands- abhängige Ermittlung der optimalen Steifigkeit zu ermöglichen, werden den Fahrzustand bestimmende maschinenspezifische und/oder stabilitätsbeeinflussende Faktoren mittels weiterer Erfassungsmittel (nicht gezeigt) sensorisch erfasst.

Alternativ oder zusätzlich kann die Datenverarbeitungseinheit 9 dazu ausgebildet sein, einen Verlauf des Winkels α und/oder der Kippneigung in Abhängigkeit von der Zeit zu ermitteln. Der Verlauf wird dann mit im Datenspeicher 91 hinterlegten Referenz-Kippneigungsverläufen verglichen. Solche Referenz- Kippneigungsverläufe sind vor allem für kritische Fahrzustände hinterlegt, um auf diese nicht nur sehr schnell, sondern vorausschauend reagieren zu können.

Durch den Vergleich der erfassten Kippneigung oder des erfassten Kippneigungsverlaufes mit der Referenz- Kippneigung oder dem Referenz- Kippneigungsverlauf wird auf die optimale Steifigkeit der Lagerung geschlossen. Die Datenverarbeitungseinheit 9 übermittelt anschließend die optimale Steifigkeit als Stellsignal S9 an die Steuerungs- und Regelungseinheit 8, die dazu eingerichtet ist, das Wirkelement 7 automatisch einzustellen, so dass die Steifigkeit der Lagerung der optimalen Steifigkeit der Lagerung entspricht oder sich dieser annähert. Das Einstellen des Wirkelementes 7 erfolgt mittels eines Steuersignals S8.

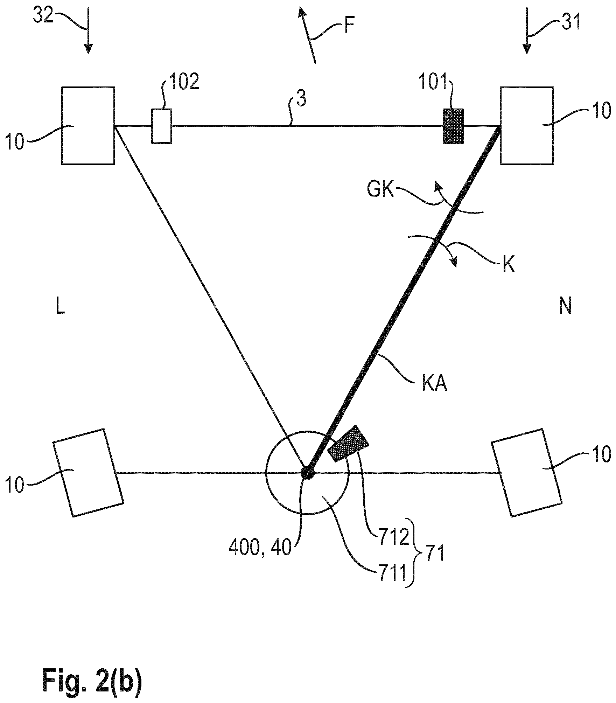

Fig. 2 (b) zeigt schematisch das Fahrwerk 2 des landwirtschaftlichen Fahrzeugs 1 aus Fig. 2(a) beim Kurvenfahren in die Fahrtrichtung F von oben. An den Enden 31, 32 des starren Achskörpers 3 sowie an den Enden 41, 42 des Pendelachskörpers 4 ist jeweils ein Rad 10 angeordnet. Am starren Achskörper 3 sind Radbremsen 101, 102 angeordnet, die zum Abbremsen jeweils eines der Räder 10 vorgesehen sind. Jedem der beiden Räder 10 ist daher jeweils eine Radbremse 101, 102 zugeordnet.

Beim Kurvenfahren erfährt das landwirtschaftliche Fahrzeug 1 eine Seitenbeschleunigung, aufgrund derer sich das Chassis 5 gegenüber dem Pendelachskörper 4 um eine durch eine Längsachse der Aufstandsfläche A gebildete Kippachse KA in eine Kipprichtung K zu einer Kippseite N hinneigt. Um die Neigung zu erschweren oder sogar zu blockieren, ist hier als Wirkelement 7 die Scheibenbremse 71 vorgesehen, die mit dem Pendelachskörper 4 und/oder dem Chassis 5 zusammenwirkt. Sie erschwert oder blockiert die Drehbewegung des Chassis 5 relativ zum Pendelachskörper 4.

Gegenüber dem landwirtschaftlichen Fahrzeug 1 der Ausführungsform der Fig. 2 (a) ist bei dieser Ausführungsform des landwirtschaftlichen Fahrzeugs 1 zudem vorgesehen, dass das am starren Achskörper 3 der Vorderachse an der Kippseite N angeordnete Rad 10, insbesondere in einem kritischen Fahrzustand, unterstützend abgebremst wird. Dadurch wird eine Gegenkraft GK erzeugt, die der Neigung des Chassis 5 in die Kipprichtung K zusätzlich entgegenwirkt.

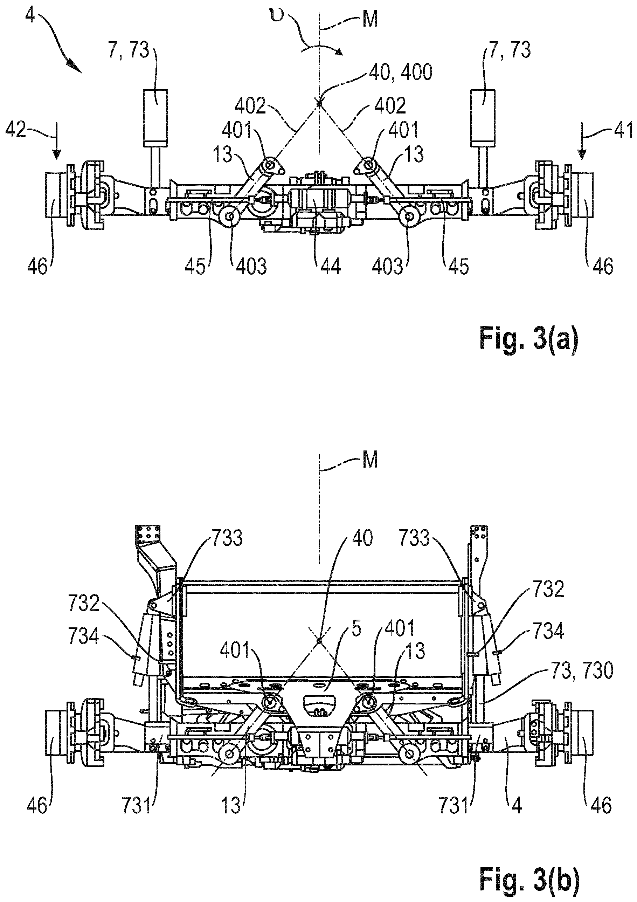

Fig. 3 zeigt in (a) und (b) einen als Viergelenkachskörper ausgebildeten Pendelachskörper 4 einer weiteren Ausführungsform eines erfindungsgemäßen landwirtschaftlichen Fahrzeugs 1, wobei in (b) ein Teil des Chassis 5 des landwirtschaftlichen Fahrzeugs 1 an dem Viergelenkachskörper gelagert ist. Im Rahmen der Fig. 3 und 4 werden die Begriffe Pendelachskörper 4 und Viergelenkachskörper synonym verwendet.

Der Viergelenkachskörper 4 weist zwei Lenker 13 auf, die jeweils mit einem ersten Gelenk 403 am Viergelenkachskörper 4 angelenkt sind und deren dem ersten Gelenk 403 gegenüberliegendes zweites Gelenk 401 jeweils zum Anlenken des Chassis 5 dient. Die beiden Lenker 13 weisen denselben Abstand (nicht bezeichnet) zur Mitte M des Viergelenkachskörper 4 auf. Sie sind in einem Winkel (nicht bezeichnet) zum Viergelenkachskörper 4 angeordnet, so dass sie einander in Richtung zur Mitte M hin zugeneigt sind. Dadurch schneiden sich fiktive Verlängerungen 402, die sich jeweils in einer Längsrichtung (nicht bezeichnet) eines der Lenker 13 erstrecken, in einem Momentanpol, der ein fiktives Lager 400 bildet, um das das Chassis 5 pendelnd gelagert ist. Eine fiktive Pendelachse 40 erstreckt sich quer zum Viergelenkachskörper 4 durch das fiktive Lager 400. Das Chassis 5 kann sich beim Umfahren von Hindernissen, beim Überfahren von Hindernissen und beim Kurvenfahren relativ zum Viergelenkachskörper 4 in und gegen eine Drehrichtung δ um die fiktive Pendelachse 40 drehen. Dabei werden die Lenker 13 um ihr erstes Gelenk 403 gedreht, so dass sich der Momentanpol der Verlängerungen 402, und daher das fiktive Lager 400, verschiebt. Eine vom Schwerpunkt S auf den Momentanpol wirkende Kraft (nicht gezeigt) weist dadurch immer eine gegen ein Umkippen wirkende Kraftkomponente auf. Ein erfindungsgemäßes landwirtschaftliches Fahrzeug 1 weist daher bevorzugt einen Viergelenkachskörper 4 als Pendelachskörper auf.

An dem Viergelenkachskörper 4 sind zudem Feder- Dämpfungselemente 73 angeordnet, die als zusätzliche Wirkelemente 7 zum Verändern der Steifigkeit der Lagerung des Chassis 5 am Viergelenkachskörper 4 dienen. Ihre Funktion wird anhand der Fig. 3 (b) erläutert.

In Fig. 3 (b) zeigt einen Teil des am Viergelenkachskörper 4 gelagerten Chassis 5. Das Chassis 5 ist an den zweiten Gelenken 401 der Lenker 13 drehbar befestigt. Beim Drehen des Chassis 5 um das fiktive Lager 400 kippt das Chassis 5 relativ zum Viergelenkachskörper 4 in eine Kipprichtung K. Dieses Kippen wird durch die Feder-Dämpfungselemente 73 erschwert oder verhindert.

Die Feder- Dämpfungselemente 73 sind hier als Hydraulikzylinder ausgebildet. Es sind aber auch andere Feder- Dämpfungselemente 73 verwendbar, insbesondere hydropneumatische Dämpfungselemente. Im Folgenden werden die Begriffe Feder- Dämpfungselement 73 und Hydraulikzylinder synonym verwendet.

Da sich beim Kippen des Chassis 5 seine Position relativ zum Viergelenkachskörper 4 ändert, ist die Position der Hydraulikzylinder 73 verschieblich vorgesehen. Die Befestigung wird hier anhand eines der Hydraulikzylinder 73 beschrieben.

An einem Kolben 730 des Hydraulikzylinders 73 ist eine Kolbenführung 731 festgelegt, die den Viergelenkachskörper 4 umgreift. Dadurch ist dieses Ende (nicht bezeichnet) des Hydraulikzylinders 73 entlang des Viergelenkachskörpers 4 verschiebbar. Der Kolben 730 selbst ist in und gegen eine hydraulische Kraft in einem Zylinder 735 des Hydraulikzylinders 73 verschieblich. Der Zylinder 735 ist mittels einer Zylinderführung 732 am Chassis 5 befestigt, so dass er bei einem Verschieben des Kolbens 730 in dem Zylinder 735 in und gegen eine Erstreckungsrichtung (nicht bezeichnet) des Hydraulikzylinders 73 verschieblich ist. An einem der Kolbenführung 731 gegenüberliegenden Ende (nicht bezeichnet) des Hydraulikzylinders 73 ist zudem ein Halteblech 734 am Chassis 5 befestigt. Das Halteblech 734 umgreift den Zylinder 735, so dass es diesen nicht nur beim Verschieben des Kolbens 730 im Zylinder 735, sondern auch beim Kippen des Chassis 5 relativ zum Viergelenkachskörper 4 hält.

Beim Kippen des Chassis 5 in eine Kipprichtung K relativ zum Viergelenkachskörper 4 wird auf der Kippseite N mittels des an der Kippseite angeordneten Hydraulikzylinders 73 ein Druck und/oder auf der Lenkseite L mittels des an der Lenkseite angeordneten Hydraulikzylinders 73 ein Zug vom Viergelenkachskörper 4 auf das Chassis 5 ausgeübt. Dadurch ändert sich die Steifigkeit der Lagerung des Chassis 5 am Viergelenkachskörper 4 und das Kippen wird erschwert oder sogar verhindert.

Beim dem in Fig. 4 schematisch dargestellten landwirtschaftlichen Fahrzeugs 1 werden Scheibenbremsen als Wirkelemente 7 zum Verändern der Steifigkeit der Lagerung des Chassis 5 am Viergelenkachskörper 4 verwendet. Diese wirken hier auf die ersten Gelenke 403 der Lenker 13. Alternativ oder zusätzlich können auch Scheibenbremsen 71 vorgesehen sein, die auf die zweiten Gelenke 401 der Lenker 13 wirken. Alternativ oder zusätzlich ist eine Ausführungsform eines landwirtschaftlichen Fahrzeugs 1 bevorzugt, bei dem Feder- Dämpfungselemente 73 die Lenker 13 ersetzen. Weiterhin können solche die Lenker 13 ersetzende Feder-Dämpfungselemente 73 auch bei dem landwirtschaftlichen Fahrzeug 1 der Fig. 3 zusätzlich verwendet werden.

### Bezugszeichenliste

- 1, 1': Landwirtschaftliches Fahrzeug, Mähdrescher, Feldhäcksler, Futtererntemaschine
- 10: Rad
- 101, 102: Radbremse
- 12: Hindernis
- 13: Lenker
- 2, 2': Fahrwerk
- 3: Starrer Achskörper (Vorderachse)
- 3': Starrer Achskörper (Hinterachse)
- 300: Lager, gefedert
- 31, 32: Ende des starren Achskörpers
- 4: Pendelachskörper
- 40: Pendelachse
- 400: Pendelachs- Aufnahme, Lager, fiktives Lager
- 401: Zweites Gelenk
- 402: Fiktive Verlängerung
- 403: Erstes Gelenk
- 41, 42: Ende des Pendelachskörpers
- 43: Teleskoparm
- 44: Lenkgetriebe
- 45: Lenkarm
- 46: Radaufnahme
- 47: Erstreckungsrichtung des Pendelachskörpers
- 5: Chassis
- 500: Zapfen
- 6: Erfassungsmittel, Pendelwinkelmesser
- 7: Wirkelement
- 71: Bremse, Scheibenbremse
- 711: Bremsscheibe
- 712: Bremssattel
- 72: Anschlag
- 73: Feder- Dämpfungselement, hydraulisches, hydropneumatisches, pneumatisches Dämpfungselement
- 730: Kolben
- 731: Kolbenführung
- 732: Zylinderführung
- 733: Zylinderaufnahme
- 734: Zylinderhalteblech
- 735: Zylinder
- 8: Steuerungs- und Regelungseinheit
- 9: Datenverarbeitungseinheit
- 91: Datenbank
- α: Ausschlag des als Pendelwinkelmesser ausgebildeten Erfassungsmittels, Winkel des Chassis zur Horizontalen
- δ: Drehrichtung des Chassis relativ zum Fahrwerk
- A, A': Aufstandsfläche
- F: Fahrtrichtung
- H: Hinterachse
- V: Vorderachse
- K: Kipprichtung
- KA, KA': Kippachse
- L: Lenkseite
- N: Kippseite
- FG: Gewichtskraft
- GK: Gegenkraft
- M: Mitte des Viergelenkachskörpers
- S: Schwerpunkt
- S6: Messsignal
- S8: Steuersignal
- S9: Stellsignal, optimale Steifigkeit
- S91: Speicherdaten

## Patentansprüche

1. Landwirtschaftliches Fahrzeug (1), insbesondere Mähdrescher, Feldhäcksler oder Futtererntemaschine, mit einem Fahrwerk (2), das einen starren Achskörper (3) und einen Pendelachskörper (4) umfasst, und mit einem Chassis (5), das an dem starren Achskörper (3) und an dem Pendelachskörper (4) gelagert ist, wobei es an dem Pendelachskörper (4) um eine Pendelachse (40) pendelnd gelagert ist, wobei das landwirtschaftliche Fahrzeug (1) zumindest ein Wirkelement (7) zum Ändern der Steifigkeit der Lagerung des Chassis (5) am Pendelachskörper (4) umfasst, das mit dem Fahrwerk (2) und/oder dem Chassis (5) zusammenwirkt, so dass sich eine Kippneigung des Chassis (5) gegenüber dem Fahrwerk (2) und/oder eine Kippneigung des Fahrzeugs (1) in Abhängigkeit von einer aktuellen Kippneigung verringert,
**dadurch gekennzeichnet,**
**dass** das zumindest ein Wirkelement (7) eine Bremse (71), insbesondere eine Scheibenbremse ist.

2. Landwirtschaftliches Fahrzeug (1) nach Anspruch 1, **dadurch gekennzeichnet, dass** das Wirkelement (7) steuerbar oder regelbar ist, wobei das landwirtschaftliche Fahrzeug (1)
• ein Erfassungsmittel (6) zum Erfassen der Kippneigung umfasst, sowie
• eine Datenverarbeitungseinheit (9), die zur Verarbeitung von Daten vorgesehen ist, sowie
• eine Steuerungs- und Regelungseinheit (8), die zum Einstellen des Wirkelements (7) vorgesehen ist,
wobei die Datenverarbeitungseinheit (9) dazu ausgebildet ist, eine optimale Steifigkeit der Lagerung in Abhängigkeit von der erfassten Kippneigung zu ermitteln, und die Steuerungs- und Regelungseinheit (8) dazu ausgebildet ist, das Wirkelement (7) in Abhängigkeit von der optimalen Steifigkeit der Lagerung automatisch einzustellen.

3. Landwirtschaftliches Fahrzeug (1) nach einem der vorhergehenden Ansprüche, **dadurch gekennzeichnet, dass** die Steuerungs- und Regelungseinheit (8) dazu ausgebildet ist, das Wirkelement (7) nur einzustellen, wenn eine Änderung der Kippneigung einen Schwellwert überschreitet.

4. Landwirtschaftliches Fahrzeug (1) nach einem der vorhergehenden Ansprüche, **dadurch gekennzeichnet, dass** die Datenverarbeitungseinheit (9) dazu ausgebildet ist, die optimale Steifigkeit in Abhängigkeit von einem Fahrzustand des landwirtschaftlichen Fahrzeugs (1) zu bestimmen.

5. Landwirtschaftliches Fahrzeug (1) nach einem der vorhergehenden Ansprüche, **dadurch gekennzeichnet, dass** die Datenverarbeitungseinheit (9) dazu ausgebildet ist, einen Verlauf der erfassten Kippneigung mit Referenz- Kippneigungsverläufen verschiedener Fahrzustände zu vergleichen, und die Steifigkeit der Lagerung in Abhängigkeit von einem Referenz- Kippneigungsverlauf einzustellen, wenn ein bestimmter, insbesondere kritischer, Fahrzustand erkannt wird.

6. Landwirtschaftliches Fahrzeug (1) nach einem der vorhergehenden Ansprüche, **dadurch gekennzeichnet, dass** das Erfassungsmittel (6) die Seitenbeschleunigung, die Rollneigung, insbesondere einen Winkel des Chassis (5) gegenüber der Horizontalen oder gegenüber dem Fahrwerk (2), und/oder den Lenkwinkel erfasst.

7. Landwirtschaftliches Fahrzeug (1) nach einem der vorhergehenden Ansprüche, **dadurch gekennzeichnet, dass** das Erfassungsmittel (6) ein Drehwinkelmesser, ein Pendelwinkelmesser, ein Beschleunigungssensor oder eine Windfahne ist.

8. Landwirtschaftliches Fahrzeug (1) nach einem der vorhergehenden Ansprüche, **dadurch gekennzeichnet, dass** ein zusätzliches Wirkelement (7) eine Feder oder ein hydraulisches, pneumatisches oder hydropneumatisches Feder- Dämpfungselement (73) ist.

9. Landwirtschaftliches Fahrzeug (1) nach einem der vorhergehenden Ansprüche, **dadurch gekennzeichnet, dass** der starre Achskörper (3) eine Vorderachse (V) und der Pendelachskörper (4) eine Hinterachse (H) des Fahrwerks (2) bildet.

10. Landwirtschaftliches Fahrzeug (1) nach einem der vorhergehenden Ansprüche, **dadurch gekennzeichnet, dass** an gegenüberliegenden Enden (31, 32) des starren Achskörpers (3) jeweils ein Rad (10) angeordnet ist, das mittels einer Radbremse (101, 102) abbremsbar ist, und die Steuerungs- und Regelungseinheit (8) dazu ausgebildet ist, zumindest eines der Räder (10) in Abhängigkeit von der optimalen Steifigkeit der Lagerung mittels seiner Radbremse (101, 102) abzubremsen.

11. Verfahren zum Verringern einer Kippneigung eines Chassis (5) eines landwirtschaftlichen Fahrzeugs (1), nach einem der vorherigen Ansprüche, gegenüber einem Fahrwerk (2) des landwirtschaftlichen Fahrzeugs (1), und/oder zum Verringern einer Kippneigung des landwirtschaftlichen Fahrzeugs, bei dem
• eine Kippneigung eines Chassis (5) gegenüber einem Fahrwerk (2) und/oder eine Kippneigung des landwirtschaftlichen Fahrzeugs (1) erfasst wird,
• anhand der erfassten Kippneigung eine optimale Steifigkeit der Lagerung ermittelt wird, und
• die Steifigkeit der Lagerung in Abhängigkeit von der optimalen Steifigkeit eingestellt wird.

12. Verfahren nach Anspruch 11, **dadurch gekennzeichnet, dass** die Steifigkeit der Lagerung neu eingestellt wird, wenn eine Änderung der Kippneigung einen Schwellwert überschreitet.

13. Verfahren nach einem der Ansprüche 11 - 12, **dadurch gekennzeichnet, dass** die optimale Steifigkeit der Lagerung ermittelt wird, indem ein Verlauf der Kippneigung mit Referenz- Kippneigungsverläufen verglichen wird, und die Steifigkeit der Lagerung in Abhängigkeit von einem der Referenz- Kippneigungsverläufe eingestellt wird, wenn ein bestimmter, insbesondere kritischer, Fahrzustand erfasst wird.

14. Verfahren nach einem der Ansprüche 11 - 13, **dadurch gekennzeichnet, dass** die optimale Steifigkeit und/oder die Referenz- Kippneigungsverläufe von maschinenspezifischen und/oder stabilitätsbestimmenden Faktoren, insbesondere vom Gewicht und/oder einer Gewichtsverteilung, des landwirtschaftlichen Fahrzeugs (1) abhängig sind.

15. Verfahren nach einem der Ansprüche 11 - 14, **dadurch gekennzeichnet, dass** die Kippneigung durch Messung einer Seitenbeschleunigung, eines Lenkwinkels und/oder einer Rollneigung erfasst wird, und dass die Steifigkeit der Lagerung verändert wird, indem die Lagerung des Chassis (5) am Pendelachskörper (4) verändert wird.

## Claims

1. An agricultural vehicle (1), in particular a combine harvester, a forage harvester or a fodder harvesting machine, comprising a running gear (2) which includes a rigid axle body (3) and a floating axle body (4), and a chassis (5) which is mounted to the rigid axle body (3) and to the floating axle body (4), wherein it is mounted swingingly to the floating axle body (4) about a swing axis (40), wherein the agricultural vehicle (1) includes at least one active element (7) for changing the stiffness of the mounting of the chassis (5) to the floating axle body (4), that co-operates with the running gear (2) and/or the chassis (5) so that a tilt inclination of the chassis (5) with respect to the running gear (2) and/or a tilt inclination of the vehicle (1) is reduced in dependence on a current tilt inclination,
**characterised in that**
the at least one active element (7) is a brake (71), in particular a disc brake.

2. An agricultural vehicle (1) according to claim 1 **characterised in that** the active element (7) is open-loop or closed-loop controllable, wherein the agricultural vehicle (1)
- includes a detection means (6) for detecting the tilt inclination, and
- a data processing unit (9) for processing data, and
- an open-loop and closed-loop control unit (8) provided for adjusting the active element (7),
wherein the data processing unit (9) is adapted to ascertain an optimum stiffness of the mounting in dependence on the detected tilt inclination and the open-loop and closed-loop control unit (8) is adapted to automatically adjust the active element (7) in dependence on the optimum stiffness of the mounting.

3. An agricultural vehicle (1) according to one of the preceding claims **characterised in that** the open-loop and closed-loop control unit (8) is adapted to adjust the active element (7) only when a change in the tilt inclination exceeds a threshold value.

4. An agricultural vehicle (1) according to one of the preceding claims **characterised in that** the data processing unit (9) is adapted to determine the optimum stiffness in dependence on a travel state of the agricultural vehicle (1).

5. An agricultural vehicle (1) according to one of the preceding claims **characterised in that** the data processing unit (9) is adapted to compare a pattern of the detected tilt inclination to reference tilt inclination patterns of different travel states and to adjust the stiffness of the mounting in dependence on a reference tilt inclination pattern when a given in particular critical travel state is detected.

6. An agricultural vehicle (1) according to one of the preceding claims **characterised in that** the detection means (6) detects the lateral acceleration, the roll inclination, in particular an angle of the chassis (5) with respect to the horizontal or with respect to the running gear (2) and/or the steering angle.

7. An agricultural vehicle (1) according to one of the preceding claims **characterised in that** the detection means (6) is a rotary angle measuring device, a swing angle measuring device, an acceleration sensor or a wind vane.

8. An agricultural vehicle (1) according to one of the preceding claims **characterised in that** an additional active element (7) is a spring or a hydraulic, pneumatic or hydropneumatic spring damping element (73).

9. An agricultural vehicle (1) according to one of the preceding claims **characterised in that** the rigid axle body (3) forms a front axle (V) and the floating axle body (4) forms a rear axle (H) of the running gear (2).

10. An agricultural vehicle (1) according to one of the preceding claims **characterised in that** arranged at opposite ends (31, 32) of the rigid axle body (3) is a respective wheel (10) which can be braked by means of a wheel brake (101, 102) and the open-loop and closed-loop control unit (8) is adapted to brake at least one of the wheels (10) in dependence on the optimum stiffness of the mounting by means of its wheel brake (101, 102).

11. A method of reducing a tilt inclination of a chassis (5) of an agricultural vehicle (1), according to one of the preceding claims, with respect to a running gear (2) of the agricultural vehicle (1) and/or reducing a tilt inclination of the agricultural vehicle, in which
- a tilt inclination of a chassis (5) with respect to a running gear (2) and/or a tilt inclination of the agricultural vehicle (1) is detected,
- an optimum stiffness of the mounting is ascertained by means of the detected tilt inclination, and
- the stiffness of the mounting is adjusted in dependence on the optimum stiffness.

12. A method according to claim 11 **characterised in that** the stiffness of the mounting is re-adjusted when a change in the tilt inclination exceeds a threshold value.

13. A method according to one of claims 11 and 12 **characterised in that** the optimum stiffness of the mounting is ascertained by a pattern of the tilt inclination being compared to reference tilt inclination patterns and the stiffness of the mounting is adjusted in dependence on the reference tilt inclination patterns when a given in particular critical travel state is detected.

14. A method according to one of claims 11 to 13 **characterised in that** the optimum stiffness and/or the reference tilt inclination patterns are dependent on machine-specific and/or stability-determining factors, in particular the weight and/or a weight distribution, of the agricultural vehicle (1).

15. A method according to one of claims 11 to 14 **characterised in that** the tilt inclination is detected by measurement of a lateral acceleration, a steering angle and/or a roll inclination and the stiffness of the mounting is altered by the mounting of the chassis (5) to the floating axle body (4) being altered.

## Revendications

1. Véhicule agricole (1), en particulier moissonneuse-batteuse, ramasseuse-hacheuse ou machine de récolte fourragère, comprenant un train de roulement (2) qui comporte un corps d'essieu (3) rigide et un corps d'essieu pendulaire (4), et comprenant un châssis (5) qui est monté sur le corps d'essieu (3) rigide et sur le corps d'essieu pendulaire (4), en étant monté sur le corps d'essieu pendulaire (4) en oscillant autour d'un axe oscillant (40), le véhicule agricole (1) comprenant au moins un élément actif (7) qui est destiné à modifier la rigidité de la suspension du châssis (5) sur le corps d'essieu pendulaire (4) et coopère avec le train de roulement (2) et/ou le châssis (5), de sorte qu'une inclinaison de basculement du châssis (5) par rapport au train de roulement (2) et/ou une inclinaison de basculement du véhicule (1) se réduit en fonction d'une inclinaison de basculement momentanée, **caractérisé en ce qu'**au moins un élément actif (7) est un frein (71), en particulier un frein à disque.

2. Véhicule agricole (1) selon la revendication 1, **caractérisé en ce que** l'élément actif (7) peut être commandé ou réglé, le véhicule agricole (1) comprenant
• un moyen de détection (6) destiné à détecter l'inclinaison de basculement, ainsi qu'
• une unité de traitement de données (9) qui est prévue pour le traitement des données, ainsi qu'
• une unité de commande et de réglage (8) qui est prévue pour le réglage de l'élément actif (7),
l'unité de traitement de données (9) étant conçue pour déterminer une rigidité optimale de la suspension, en fonction de l'inclinaison de basculement mesurée, et l'unité de commande et de réglage (8) étant conçue pour régler automatiquement l'élément actif (7) en fonction de la rigidité optimale de la suspension.

3. Véhicule agricole (1) selon l'une des revendications précédentes, **caractérisé en ce que** l'unité de commande et de réglage (8) est conçue pour régler l'élément actif (7) uniquement si une variation de l'inclinaison de basculement dépasse une valeur de seuil.

4. Véhicule agricole (1) selon l'une des revendications précédentes, **caractérisé en ce que** l'unité de traitement de données (9) est conçue pour déterminer la rigidité optimale en fonction d'un mode de marche du véhicule agricole (1).

5. Véhicule agricole (1) selon l'une des revendications précédentes, **caractérisé en ce que** l'unité de traitement de données (9) est conçue pour comparer une variation de l'inclinaison de basculement détectée avec des variations d'inclinaison de basculement de référence de différents modes de marche, et pour régler la rigidité de la suspension en fonction d'une variation d'inclinaison de basculement de référence, si un mode de marche précis, notamment critique, est détecté.

6. Véhicule agricole (1) selon l'une des revendications précédentes, **caractérisé en ce que** le moyen de détection (6) détecte l'accélération latérale, l'inclinaison de roulis, en particulier un angle du châssis (5) par rapport à l'horizontale ou par rapport au train de roulement (2), et/ou l'angle de braquage.

7. Véhicule agricole (1) selon l'une des revendications précédentes, **caractérisé en ce que** le moyen de détection (6) est un capteur d'angle de rotation, un capteur d'angle d'oscillation, un capteur d'accélération ou un anémoscope.

8. Véhicule agricole (1) selon l'une des revendications précédentes, **caractérisé en ce qu'**un élément actif (7) supplémentaire est un ressort ou un élément amortisseur à ressort (73) hydraulique, pneumatique ou hydropneumatique.

9. Véhicule agricole (1) selon l'une des revendications précédentes, **caractérisé en ce que** le corps d'essieu (3) rigide constitue un essieu avant (V), et le corps d'essieu pendulaire (4) constitue un essieu arrière (H) du train de roulement (2).

10. Véhicule agricole (1) selon l'une des revendications précédentes, **caractérisé en ce qu'**aux extrémités opposées (31, 32) du corps d'essieu (3) rigide, est disposée respectivement une roue (10) qui peut être freinée au moyen d'un frein sur roue (101, 102), et l'unité de commande et de réglage (8) est conçue pour freiner au moins une des roues (10) en fonction de la rigidité optimale de la suspension, à l'aide de son frein sur roue (101, 102).

11. Procédé destiné à réduire une inclinaison de basculement d'un châssis (5) d'un véhicule agricole (1) selon l'une des revendications précédentes, par rapport à un train de roulement (2) du véhicule agricole (1), et/ou à réduire une inclinaison de basculement du véhicule agricole, selon lequel
• on détecte une inclinaison de basculement d'un châssis (5) par rapport à un train de roulement (2) et/ou une inclinaison de basculement du véhicule agricole (1),
• on détermine une rigidité optimale de la suspension, à l'aide de l'inclinaison de basculement détectée, et
• la rigidité de la suspension est réglée en fonction de la rigidité optimale.

12. Procédé selon la revendication 11, **caractérisé en ce que** la rigidité de la suspension est de nouveau réglée lorsqu'une variation de l'inclinaison de basculement dépasse une valeur de seuil.

13. Procédé selon l'une des revendications 11 à 12, **caractérisé en ce que** la rigidité optimale de la suspension est déterminée en comparant une variation de l'inclinaison de basculement à des variations d'inclinaison de basculement de référence, et la rigidité de la suspension est réglée en fonction de l'une des variations d'inclinaison de basculement de référence lorsqu'un mode de marche précis, notamment critique, est détecté.

14. Procédé selon l'une des revendications 11 à 13, **caractérisé en ce que** la rigidité optimale et/ou les variations d'inclinaison de basculement de référence sont fonction de facteurs spécifiques à la machine et/ou déterminant la stabilité, notamment du poids et/ou d'une répartition de poids, du véhicule agricole (1).

15. Procédé selon l'une des revendications 11 à 14, **caractérisé en ce que** l'inclinaison de basculement est déterminée en mesurant une accélération latérale, un angle de braquage et/ou une inclinaison de roulis, et **en ce que** la rigidité de la suspension est modifiée en modifiant la suspension du châssis (5) sur le corps d'essieu pendulaire (4).
